# FASCICULE DE BREVET EUROPEEN

(11) **EP 0 941 304 B1**
(45) Date de publication et mention de la délivrance du brevet: **16.05.2007**
(21) Numéro de dépôt: 96935206.1
(22) Date de dépôt: 31.10.1996
(51) Int. Cl.: C12H 1/14, C12H 1/00, C12C 5/02, C12C 7/00

(54) **Boisson fermentée à base de moût de bière et son procédé de préparation**
Fermentiertes Getränk aus Bierwürze, sowie Verfahren zur Herstellung
Fermented beverage with beer wort base and method for preparing same

(43) Date de publication de la demande: 15.09.1999
(73) Titulaire: INTERBREW, 1000 Bruxelles (BE)
(72) Inventeur: MALCORPS, Philippe, B-1370 Jodoigne (BE); DUPIRE, Stéphane, B-1350 Orp-le-Grand (BE); VAN DEN EYNDE, Erik, B-3020 Winksele (BE)
(74) Mandataire: Gevers, François
(86) Numéro de dépôt international: PCT/IB1996/001171
(87) Numéro de publication internationale: WO 1998/018902

(56) Documents cités:
- WO-A-96/04363
- BE-A- 755 763
- GB-A- 950 128
- GB-A- 2 189 808
- US-A- 3 573 928
- BIOS, vol. 12, no. 1-2, Janvier 1981 - Février 1981, FR, pages 9-12, XP002035332 ANON: "Evaluation des additifs en chaudière."
- Les specifications des produits Unipectine Q 40 et Satiagum BDC 20 de SKW Biosystems*r*n

## Description

La présente invention se rapporte à une boisson fermentée à base de moût de bière.
Elle se rapporte également à un procédé de préparation d'une boisson fermentée à base de moût de bière.
Elle concerne enfin une utilisation de composés en vue de l'amélioration de certaines des qualités de boissons fermentées.

Généralement, la préparation d'une bière de type Pils met en oeuvre une série d'étapes destinées à obtenir une bière la plus limpide possible. Ces différentes étapes comprennent notamment une précipitation, une adsorption, une centrifugation et une filtration du moût de bière. Les bières de type Pils sont alors considérées comme étant colloïdalement stables lorsqu'elles ne développent plus aucun trouble à la fin de leur cycle de préparation et au cours de leur conservation.

A l'opposé des bières de type Pils, certaines bières spéciales, pour plaire au consommateur, ont comme caractéristique principale de présenter au moment de leur consommation, un trouble plus ou moins important et durable qui leur donne un aspect de bière non filtrée et leur confère un caractère artisanal et naturel.

Dans ce type de bières, le trouble est généralement dû à la présence de levures, de particules en suspension, principalement des protéines, pouvant présenter des tailles et des compositions très différentes. En effet, la fraction principale de la suspension dépend du procédé de préparation et des conditions de conservation de la bière finie, notamment de la durée préalable de la décantation et de la température à laquelle elle a été réalisée.

On distingue généralement deux types principaux de troubles, selon leur comportement en fonction de la température.

Le premier type correspond aux troubles dits irréversibles qui subsistent après réchauffement de la bière à une température de l'ordre de 15°C. Les principales particules rencontrées dans les troubles irréversibles sont notamment les levures, les particules de protéines ou d'amidon, les cristaux d'oxalate.

Le second type correspond aux troubles dits réversibles qui se forment lors du refroidissement de la bière à la température de consommation, généralement inférieure à environ 12°C, et qui disparaissent totalement ou partiellement avec le réchauffement de la bière. Le trouble réversible est principalement constitué de protéines et de polyphénols.

Après la préparation, la plupart des troubles rencontrés dans les bières tendent à sédimenter au cours de la conservation, en donnant finalement une bière plus ou moins clarifiée ainsi qu'un dépôt.
Ce dépôt peut être re-suspendu par agitation au moment de servir la bière, afin d'obtenir à nouveau une boisson présentant un trouble suffisant.
On conçoit cependant aisément qu'une telle façon d'opérer n'est pas systématiquement observée par le consommateur.

Il est par conséquent important pour le brasseur de pouvoir offrir une boisson présentant un trouble de bonne qualité et susceptible de persister, au moins le temps de sa consommation, sans nécessité pour le consommateur d'une opération particulière.

L'invention a pour but de répondre en grande partie à ce but en proposant une nouvelle boisson fermentée à base de moût de bière présentant un trouble amélioré.

On connaît, d'après le WO 96/04363, un procédé pour améliorer la stabilité de la mousse produite par certaines boissons telles que de la bière, consistant à ajouter une ou plusieurs pectines pendant ou après le processus de préparation d'une telle boisson.
On sait également que d'autres polysaccharides présentent la même propriété, par exemple des gommes ou des amidons modifiés ou des dérivés de cellulose.
On sait également que le fait d'ajouter un carraghénane dans un moût chaud stimule la coagulation des protéines solubles contenues dans ce moût et facilite la sédimentation de ces protéines et donc la clarification de la bière.

Un premier objet de la présente invention est de fournir une boisson fermentée à base de moût de bière dont la stabilité des troubles est améliorée comme définie dans la revendication 14.

Un autre objet de la présente invention concerne un procédé de préparation d'une boisson fermentée à base de moût de bière possédant un trouble à persistance améliorée comme définie dans la revendication 1.

Les Inventeurs de la présente demande de brevet ont en effet découvert de façon surprenante que les troubles pouvaient être améliorés par l'action de composés capables d'inhiber la coagulation et la précipitation des protéines contenues dans le moût utilisé pour la préparation de ladite boisson ou dans la boisson finie, en formant par exemple avec celles-ci des complexes stables pendant un certain temps, ou en formant une suspension dans le moût

Selon l'invention, le produit d'addition est soluble dans l'eau. Dans le cadre de la présente invention, on entend par "soluble dans l'eau" un produit pouvant former une solution aqueuse à une concentration d'au moins environ 10 mg/l d'eau.

Avantageusement, le produit d'addition consiste en un ou plusieurs polysaccharides choisis dans le groupe comprenant notamment les dérivés d'amidon, les dérivés de cellulose, la pectine ou ses dérivés, notamment la pectine amidée (E 440), les gommes glucidiques ou leurs dérivés.

On citera à titre d'exemples non limitatifs de dérivés de cellulose utilisables dans le cadre de la présente invention l'hémicellulose, la cellulose microcristalline (E 460), la méthylcellulose (E 461), l'hydroxypropylcellulose (E 463), l'hydroxypropylméthylcellulose (E 464), la méthyléthylcellulose (E 465) et la carboxyméthylcellulose (E 466).

On citera à titre d'exemples non limitatifs de dérivés d'amidon utilisables dans le cadre de la présente invention les amidons modifiés E 1404 à E 1450 tels que décrits dans la Directive Européenne 95/2/EC n°L61/1 du 20/02/1995.

On citera à titre d'exemples non limitatifs de gommes utilisables dans le cadre de la présente invention la gomme xanthane (E 415), la gomme adragante (E 413), la gomme acacia, l'acide alginique (E 400) et ses sels, notamment de sodium (E 401), de potassium (E 402), d'ammonium (E 403), de calcium (E 404), l'alginate de propylène glycol (E 405), la gomme karaya (E 416).

D'autres polysaccharides utilisables dans le cadre de la présente invention comprennent ceux appartenant à la famille des carraghénanes.

Dans ce qui précède sont indiqués les numéros correspondant à la législation européenne en matière de produits alimentaires de certains des produits utilisables dans le cadre de la présente invention, à partir de la publication Eurofood Monitor, European Union Legislation on Foodstuffs, Agra Europe (london) Ltd.

Selon une première forme de réalisation de la présente invention, le produit d'addition comprend un polysaccharide tel que défini ci-dessus.

Selon une autre forme de réalisation de la présente invention, le produit d'addition comprend un mélange de plusieurs polysaccharides tels que définis ci-dessus.

Il n'est pas nécessaire de décrire plus en détail ici les étapes de cuisson, d'ébullition ou de fermentation du moût. Celles-ci correspondent en effet à celles couramment utilisés dans l'industrie de la brasserie. L'homme du métier pourra se référer aux techniques conventionnelles de brassage, de maltage et de houblonnage, telles que décrites par exemple dans la publication "Bières et Coolers", M. Moll, Collection Sciences et Techniques agro-alimentaires, Apria, Paris 1991.

Selon l'invention, le produit d'addition consiste essentiellement en un ou plusieurs polysaccharides tels que définis dans ce qui précède.

Le produit d'addition est ajouté, sous forme de poudre ou de préférence sous la forme d'une solution aqueuse, à l'une quelconque des étapes de préparation de la boisson fermentée. Selon une première forme de mise en oeuvre de la présente invention, le produit d'addition est ajouté à un moment quelconque entre le début de l'étape d'ébullition du moût et le début de l'étape de refroidissement du moût.

Selon encore une autre forme de mise en oeuvre du procédé de la présente invention, le produit d'addition est ajouté dans le produit fini.

Le produit d'addition est ajouté selon l'invention à une dose variant d'environ 5 à environ 2000 mg/l de moût ou de boisson, de préférence d'environ 10 à environ 1000 mg/l de moût ou de boisson, de façon encore plus préférée d'environ 50 à environ 500 mg/l de moût ou de boisson.

Les doses inférieures employées dépendent du type de polysaccharide employé, de la composition physico-chimique de la boisson, du moment d'ajout et du degré de pureté du polysaccharide.

Le critère de pureté des polysaccharides n'est pas un facteur essentiel pour l'application de l'invention car il suffit d'adapter les doses appliquées en conséquence. Ainsi par exemple, la pectine peut être introduite sous forme d'une source brute ou impure, tel qu'une fraction, extrait ou concentré de fruit.

Dans le cas particulier où le polysaccharide doit être extrait et solubilisé au cours du procédé, la forme préférentielle d'ajout se situe dans le moût chaud.

Les doses supérieures sont généralement limitées par des problèmes d'effets secondaires de déviation visuelle ou organoleptique, spécifique à chaque polysaccharide et au type de boisson, comme par exemple la formation d'un précipité, une viscosité trop élevée, une déstabilisation de la mousse, ou l'apparition de goûts inacceptables.

L'homme du métier retrouvera aisément les conditions d'ajout optimales caractéristiques à sa propre boisson en réalisant une série limitée d'essais empiriques systématiques.

Selon l'invention, les polysaccharides utilisables sont tels que définis dans ce qui précède.

Des avantages et caractéristiques supplémentaires de l'invention apparaîtront encore à la lumière de la description plus détaillée qui suit d'exemples de réalisation de la présente invention, donnés à titre purement illustratif et non limitatif, ainsi qu'aux figures qui s'y rapportent et dans lesquelles :
- la figure 1 est un graphique représentant l'effet sur la cassure protéique d'un produit d'addition selon l'invention;
- la figure 2 est un graphique illustrant l'effet sur le trouble d'un moût de doses croissantes d'un produit d'addition selon l'invention ;
- la figure 3 est une représentation par histogrammes de la distribution de taille de particules protéiques d'un premier échantillon de bière n'ayant pas reçu de produit d'addition selon l'invention;
- la figure 4 est une représentation par histogrammes de la distribution de taille de particules protéiques d'un second échantillon de bière ayant reçu un produit d'addition selon l'invention; et
- la figure 5 est un graphique représentant l'évolution du trouble de deux échantillons de bière en fonction du temps de stockage à froid et de la température de service de la bière.

Le principe de base de l'invention est de réaliser des complexes entre les polysaccharides introduits et les protéines du moût ou de la bière. Selon la réactivité des polysaccharides et le moment de leur mise en oeuvre, ces complexes peuvent spontanément précipiter sous la forme d'un trouble, ou peuvent modifier les conditions de précipitation des protéines au cours du procédé ou dans la bière finie.

La gomme acacia contient une fraction glycoprotéique qui possède des propriétés de stabilisation des systèmes colloïdaux. la réactivité de cette gomme est faible, en ce sens qu'elle ne crée pas de trouble immédiat dans la bière, mais son effet devient perceptible lors de la formation de la décantation du trouble au froid réversible. Cette gomme est préférentiellement ajoutée en fin de procédé pour éviter sa dégradation thermique.

La pectine réagit avec les protéines qui précipitent lors du refroidissement du moût et de la bière. Il s'ensuit qu'un ajout dans le moût chaud aura pour premier résultat la formation d'un trouble permanent qui se maintiendra au cours du procédé jusque dans la bière finie, et comme second résultat de modifier les conditions de formation et de précipitation du trouble au froid réversible dans la bière finie.

La pectine peut être également introduite dans la bière pour agir préférentiellement sur la stabilisation de la fraction réversible du trouble formé à basse température.

L'ajout de carraghénanes dans le moût est une pratique courante en brasserie pour favoriser la clarification du moût en accélérant la précipitation et la floculation de la cassure protéique. Dans l'invention, la forte réactivité des carraghénanes vis-à-vis des protéines est au contraire mise à profit pour créer et maintenir un trouble permanent dans la bière à température ambiante. L'action de ce polysaccharide se manifeste également dans le ralentissement de la vitesse de sédimentation des particules protéiques du trouble qui se forme lors du refroidissement de la bière finie.

### Exemple 1.

Dans cet exemple, l'effet d'un produit d'addition conforme à l'invention sur la qualité du trouble d'une bière est étudié.

Pour ce faire, deux échantillons de moût de bière sont prélevés au cours d'un cycle de préparation d'une bière spéciale, pendant l'étape de cuisson. Le premier échantillon (échantillon A) ne reçoit pas de produit d'addition et sert de témoin. Le second échantillon (échantillon B) reçoit un produit d'addition consistant en de la pectine, à une dose de 0,30 g/l de moût.

La pectine utilisée est le produit disponible commercialement sous la dénomination Pectine Q40 (E440) auprès de la société Sanofi, France.

Les deux échantillons A et B sont placés dans des tubes gradués de 500 ml.
La qualité du trouble des deux moûts est évaluée de la façon suivante. Le volume de décantation de la cassure protéique contenant les fractions protéiques coagulées et ayant précipité est mesuré.
Cette méthode d'évaluation du trouble du moût est notamment décrite dans la publication "Bières et Coolers", Paris, 1991, p 130.

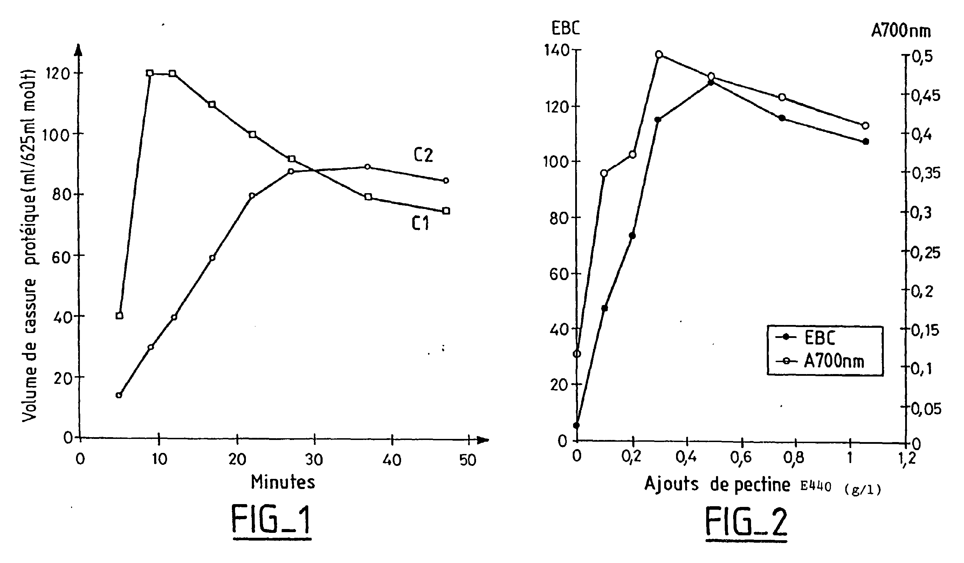

En se référant maintenant à la figure 1, il apparaît que la formation de la cassure protéique de l'échantillon B (courbe C2) est ralentie, en comparaison avec celle de l'échantillon A (courbe C1).
Une cassure protéique rapide et élevée correspondant à un trouble rémanent faible, la pectine agit donc comme un facteur inhibant et diminuant la cassure protéique, et par conséquent comme un facteur augmentant la qualité du trouble dans la bière.
Ceci est clairement démontré à la figure 2, montrant l'effet de la concentration en pectine ajoutée dans le moût chaud sur la formation de trouble à 20°C dans le moût refroidi et centrifugé.

Les résultats indiqués à la figure 2 sont obtenus de la manière suivante :

Le moût chaud (100°C) est prélevé en fin d'étape de cuisson et divisé en échantillons sans ajout de pectine (0 g/l), ou avec ajout de pectine (0,1 g/l, 0,2 g/l, 0,3 g/l, 0,5 g/l, 0,75 g/l ou 1 g/l). Après dissolution de la pectine par agitation douce pendant 5 min, les échantillons de moût sont refroidis à 20°C et centrifugés (2500 x g, 15 min). Le trouble est mesuré dans chaque surnageant, par absorbance (A700nm) ou par néphélométrie (unités EBC).

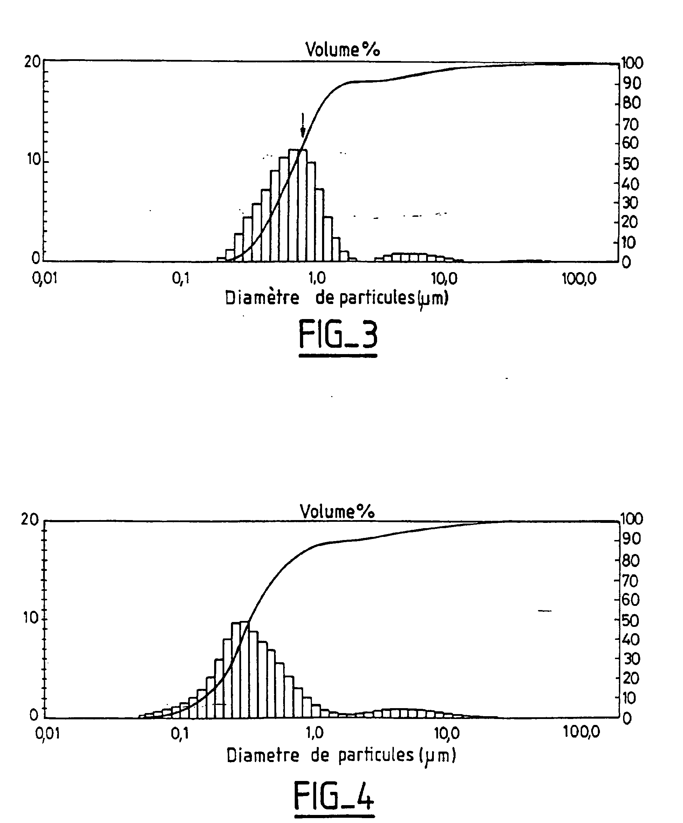

La distribution relative de la taille des particules protéiques dans les bières issues des deux moûts de type A et B est ensuite mesurée par spectroscopie à corrélation de photons, en utilisant un appareil Mastersizer (Malvern Instruments, Grande-Bretagne). Les résultats sont donnés sur les figures 3 et 4.

Il apparaît de la figure 3 que les particules de la bière de type A possèdent un diamètre moyen d'environ 0,8 µm alors qu'en se référant maintenant à la figure 4, les particules de la bière de type B possèdent un diamètre moyen d'environ 0,3 µm, mettant en évidence le rôle de la pectine dans l'inhibition de la coagulation et de la précipitation des protéines du moût.

Les deux bières A et B sont ensuite stockées à 0°C pendant deux semaines. Le trouble est évalué en mesurant l'absorbance à 700 nm en spectrométrie U.V. - visible (cellule de 1 cm) après 24 heures, une semaine, deux semaines et trois semaines de conservation, et en réchauffant la bière de 0°C à 20°C.

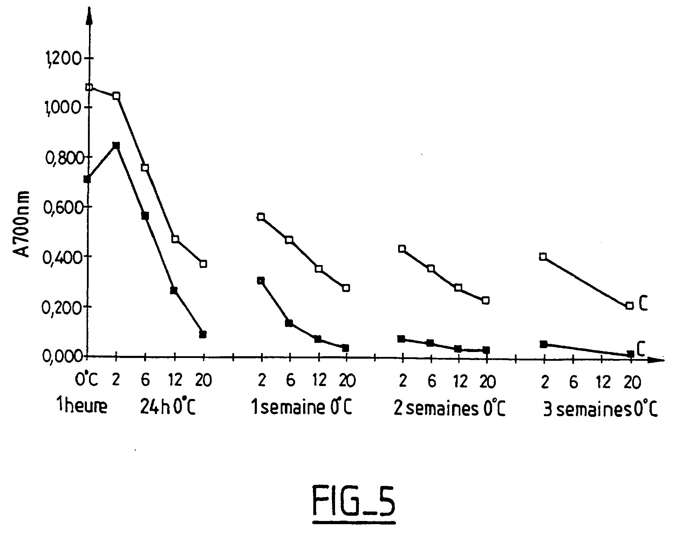

Il apparaît sur la figure 5 que l'intensité des troubles des deux échantillons de bière diminue au cours du stockage mais que la bière n'ayant pas reçu de pectine (courbe C3) possède un trouble de moindre intensité que la bière ayant reçu de la pectine (courbe C4).

L'amélioration de la stabilité du trouble lors du stockage apparaît à travers l'expression de deux phénomènes. d'une part, le trouble dit "permanent" parce que persistant après réchauffement à 20°C dans le verre, est 4 à 10 fois plus élevé dans l'essai, comparé à la bière sans pectine, même après une période prolongée de décantation à 0°C. D'autre part, la fraction du trouble au froid dite "réversible", calculée par différence entre la valeur mesurée à 2°C et celle mesurée à 20°C, est également plus élevée dans l'essai, comparé à la bière sans pectine, après 3 semaines de décantation à 0°C. Ce dernier effet stabilisant sur la fraction réversible du trouble est similaire à celui décrit dans le Tableau 1 joint en annexe.

### Exemple 2.

Dans cet exemple, plusieurs produits d'addition selon l'invention sont testés.
Les produits d'addition utilisés dans l'exemple 2 ne sont plus ajoutés pendant la cuisson du moût, comme cela était le cas dans l'exemple 1, mais dans la bière finie. Les échantillons sont conservés à 0°C pendant une durée de quatre semaines. Le trouble de la bière décantée est évalué à 2°C et après réchauffement dans un verre à 20°C, en utilisant la même méthode que celle décrite dans l'exemple 1.
Les résultats sont donnés dans le tableau 1 figurant en annexe de la présente demande de brevet.
Il apparaît des résultats obtenus que les produits d'addition utilisés ont tous un effet ralentissant la vitesse de sédimentation de la fraction réversible du trouble de la bière et prolongent par conséquent la persistance du trouble dans le produit. Par contre, les doses à utiliser pour chaque produit peuvent varier beaucoup d'un produit à l'autre.
La mise en oeuvre de l'invention permet la production de boissons possédant un trouble permanent de bonne qualité pendant au moins quatre semaines, à une température de conservation de 20°C, et de boissons possédant un trouble réversible de bonne qualité pendant au moins trois semaines, à une température de conservation de 0°C.

Dans le cas particulier du produit d'addition 2 (carraghénane), on observe aussi une légère augmentation du trouble permanent mesuré à 20°C (0,074 A en moyenne, contre 0,027 A dans le témoin).

Il va de soi que la présente invention n'entend pas se limiter aux exemples de réalisation qui viennent d'être décrits.

L'homme du métier aura tout loisir d'adapter la présente invention à ses propres besoins, en réalisant simplement des opérations de mise au point sans pour autant sortir du cadre des éléments essentiels de celle-ci, tels que définis dans les revendications qui suivent.

**Tableau 1.**

| Durée de stockage à 0°C | Bière témoin sans produit d'addition | | Produit d'addition 1 | | Produit d'addition 2 | | Produit d'addition 3 | |
|---|---|---|---|---|---|---|---|---|
| T (°C) | 2 | 20 | 2 | 20 | 2 | 20 | 2 | 20 |
| 7 jours | 0,310 | 0,037 | 0,527 | 0,029 | 0,521 | 0,099 | 0,484 | 0,020 |
| 14 jours | 0,102 | 0,029 | 0,416 | 0,057 | 0,352 | 0,096 | 0,241 | 0,019 |
| 21 jours | 0,083 | 0,038 | 0,377 | 0,037 | 0,285 | 0,084 | 0,165 | 0,020 |
| 28 jours | 0,052 | 0,027 | 0,161 | 0,016 | 0,242 | 0,074 | 0,097 | 0,020 |

| | | | | | | | | |
|---|---|---|---|---|---|---|---|---|
| Produit d'addition 1 : Gomme acacia, disponible commercialement auprès de la société Janssen Pharmaceuticals, Belgique, à une dose de 1000 mg/l de bière. Produit d'addition 2 : carraghénane Satiagim E (E407), disponible commercialement auprès de la société Sanofi, France, à une dose de 10 mg/l de bière. Produit d'addition 3 : pectine Q40 (E440) (pureté 70 à 80%), disponible commercialement auprès de la société Sanofi, France, à une dose de 100 mg/l de bière. | | | | | | | | |

## Revendications

1. Procédé pour préparer une boisson fermentée à partir d'un moût de bière, ladite boisson fermentée ayant un trouble, ledit trouble étant un trouble dit irréversible ou permanent à la température ambiante et/ou un trouble au froid réversible, ledit procédé étant **caractérisé en ce qu'**au moins un polysaccharide est ajouté dans le moût de bière ou dans la boisson fermentée, ledit polysaccharide étant soluble dans l'eau et étant ou bien un polysaccharide capable de former des complexes avec des fractions protéiques dudit moût ou de ladite boisson, afin d'inhiber la coagulation et la précipitation des protéines, ou bien un polysaccharide capable de former une suspension dans ledit moût ou ladite boisson.

2. Procédé selon la revendication 1, **caractérisé en ce que** le polysaccharide est choisi dans le groupe comprenant notamment les dérivés d'amidon, les dérivés de cellulose, la pectine ou dérivés de pectine, notamment la pectine amidée, les gommes glucidiques ou dérivés de gommes glucidiques, ou des mélanges de ceux-ci.

3. Procédé selon l'une quelconque des revendications 1 ou 2, **caractérisé en ce que** le polysaccharide est choisi parmi les dérivés d'amidon, notamment parmi les amidons modifiés E1404 à E1450.

4. Procédé selon l'une quelconque des revendications 1 à 3, **caractérisé en ce que** le polysaccharide est choisi parmi les pectines du type E440 ou parmi leurs dérivés.

5. Procédé selon la revendication 4, **caractérisé en ce que** la pectine est introduite dans le moût chaud en vue de créer un trouble permanent.

6. Procédé selon la revendication 4, **caractérisé en ce que** la pectine est introduite dans la bière finie pour ralentir la vitesse de sédimentation de la fraction réversible du trouble de la bière et prolonger la persistance du trouble.

7. Procédé selon l'une des revendications 4 à 6, **caractérisée en ce que** la pectine est ajoutée à une dose comprise entre environ 10 et environ 1000 mg/l, avantageusement entre environ 50 et environ 500 mg/l.

8. Procédé selon l'une quelconque des revendications 1 ou 2, **caractérisé en ce que** le polysaccharide est choisi parmi les carraghénanes et est introduit dans la bière finie pour former un trouble permanent et stabiliser le trouble au froid.

9. Procédé selon la revendication 8, **caractérisée en ce que** le carraghénane, fortement réactif, est ajouté à une dose de l'ordre de 10 mg/l environ.

10. Procédé selon l'une quelconque des revendications 1 ou 2, **caractérisé en ce que** le polysaccharide est choisi parmi les gommes, par exemple parmi les gommes E400, E401, E402, E403, E404, E405, E413, E415, E416, ou la gomme acacia.

11. Procédé selon la revendication 10, **caractérisé en ce que** la gomme acacia, faiblement réactive, est ajoutée à une dose de l'ordre de 1 000 mg/l environ, et est introduite de préférence dans la bière finie pour stabiliser et maintenir en suspension le trouble au froid réversible.

12. Procédé selon l'une quelconque des revendications précédentes, **caractérisé en ce que** le polysaccharide est ajouté à une dose comprise entre environ 5 mg/l et environ 2000 mg/l de moût ou de bière, avantageusement entre environ 10 mg/l et environ 1000 mg/l, de préférence entre environ 50 mg/l et 500 mg/l, les doses inférieures dépendant du type de polysaccharide employé, de la composition physico-chimique de la boisson, du moment d'ajout et du degré de pureté du polysaccharide, et les doses supérieures dépendant du type de polysaccharide et du type de boisson.

13. Procédé selon l'une quelconque des revendications 1 à 12, **caractérisé en ce qu'**il comprend une étape d'addition de pectine dans le moût chaud suivie d'une étape de centrifugation du moût.

14. Boisson fermentée préparée à partir d'un moût de bière, **caractérisée en ce qu'**elle a été préparée par la mise en oeuvre du procédé selon l'une des revendications 1 à 13, ladite boisson présentant un trouble dit irréversible ou permanent à la température ambiante et/ou un trouble au froid réversible.

## Claims

1. Method for preparing a fermented drink from beer wort, the said fermented drink having a cloudiness, the said cloudiness being a so-called irreversible or permanent cloudiness at room temperature and/or a reversible cloudiness when cold, the said method being **characterised in that** at least one polysaccharide is added to the beer wort or to the fermented drink, the said polysaccharide being soluble in water and being either a polysaccharide capable of forming complexes with protein fractions of the said wort or of the said drink, in order to inhibit the coagulation and precipitation of the proteins, or a polysaccharide capable of forming a suspension in the said wort or the said drink.

2. Method according to claim 1, **characterised in that** the polysaccharide is chosen from the group comprising in particular derivatives of starch, derivatives of cellulose, pectin or derivatives of pectin, in particular starchy pectin, glucidic gums or derivatives of glucidic gums, or mixtures of these.

3. Method according to either one of claims 1 or 2, **characterised in that** the polysaccharide is chosen from starch derivatives, in particular from E1404 to E1450 modified starches.

4. Method according to any one of claims 1 to 3, **characterised in that** the polysaccharide is chosen from pectins of the E440 type or from derivatives thereof.

5. Method according to claim 4, **characterised in that** the pectin is introduced into the hot wort with a view to creating a permanent cloudiness.

6. Method according to claim 4, **characterised in that** the pectin is introduced into the finished beer in order to slow down the rate of sedimentation of the reversible fraction of the cloudiness of the beer and to prolong the persistence of the cloudiness.

7. Method according to one of claims 4 to 6, **characterised in that** the pectin is added in a proportion of between approximately 10 and approximately 1000 mg/litre, advantageously between approximately 50 and approximately 50 mg/litre.

8. Method according to either one of claims 1 or 2, **characterised in that** the polysaccharide is chosen from carrageenans and is introduced into the finished beer in order to form a permanent cloudiness and stabilise the cloudiness when cold.

9. Method according to claim 8, **characterised in that** the carrageenan, which is highly reactive, is added in a proportion of around approximately 10 mg/litre.

10. Method according to either one of claims 1 or 2, **characterised in that** the polysaccharide is chosen from gums, for example from the E400, E401, E402, E403, E404, E405, E413, E415 or E416 gums, or gum acacia.

11. Method according to claim 10, **characterised in that** gum acacia, which is not very reactive, is added in a proportion of around approximately 1000 mg/litre, and is preferably introduced into the finished beer in order to stabilise and keep the reversible cloudiness in suspension when cold.

12. Method according to any one of the preceding claims, **characterised in that** the polysaccharide is added in a proportion of between approximately 5 mg/litre and approximately 2000 mg/litre of wort or beer, advantageously between approximately 10 mg/litre and approximately 1000 mg/litre, preferably between 50 mg/litre and approximately 500 mg/litre, the lower proportions depending on the type of polysaccharide used, and the physical and chemical composition of the drink, the time of adding and the degree of purity of the polysaccharide, and the higher proportions depending on the type of polysaccharide and the type of drink.

13. Method according to any one of claims 1 to 12, **characterised in that** it comprises a step of adding pectin to the hot wort followed by a step of centrifugation of the wort.

14. Fermented drink prepared from a beer wort, **characterised in that** it has been prepared by implementing the method according to one of claims 1 to 13, the said drink having a so-called irreversible or permanent cloudiness at room temperature and/or reversible cloudiness when cold.

## Patentansprüche

1. Verfahren zur Herstellung eines fermentierten Getränkes aus Bierwürze, wobei das fermentierte Getränk eine Trübung aufweist und es sich bei dieser Trübung um eine Trübung handeln kann, die bei Umgebungstemperatur als irreversibel oder permanent zu bezeichnen ist und/oder um einen reversiblen Kalttrub, **dadurch gekennzeichnet, dass** der Bierwürze oder dem fermentierten Getränk mindestens ein Polysaccharid zugesetzt ist, wobei das Polysaccharid wasserlöslich ist und es sich dabei entweder um ein Polysaccharid handeln kann, welches dazu befähigt ist, mit Proteinfraktionen der Würze oder des Getränks Komplexe zu bilden, um die Koagulation und die Ausfällung der Proteine zu verhindern, oder aber um ein Polysaccharid, welches dazu befähigt ist, in der Würze oder in dem Getränk eine Suspension zu bilden.

2. Verfahren gemäß Anspruch 1, **dadurch gekennzeichnet, dass** das Polysaccharid aus der Gruppe gewählt ist, die insbesondere Stärkederivate, Cellulosederivate, Pektin sowie Pektinderivate, insbesondere amidiertes Pektin, Stärkegummi und Stärkegummiderivate oder Mischungen daraus umfasst.

3. Verfahren gemäß einem beliebigen der Ansprüche 1 oder 2, **dadurch gekennzeichnet, dass** das Polysaccharid aus den Stärkederivaten, insbesondere aus den modifizierten Stärken E1404 bis E1450, gewählt ist.

4. Verfahren gemäß einem beliebigen der Ansprüche 1 bis 3, **dadurch gekennzeichnet, dass** das Polysaccharid aus den Pektinen des Typs E440 oder deren Derivaten gewählt ist.

5. Verfahren gemäß Anspruch 4, **dadurch gekennzeichnet, dass** das Pektin der warmen Würze zugesetzt wird, um eine permanente Trübung zu erzeugen.

6. Verfahren gemäß Anspruch 4, **dadurch gekennzeichnet, dass** das Pektin dem Bierendprodukt zugesetzt wird, um die Absetzgeschwindigkeit der reversiblen Fraktion der Biertrubstoffe zu verringern und die Beständigkeit der Trübung zu verlängern.

7. Verfahren gemäß einem der Ansprüche 4 bis 6, **dadurch gekennzeichnet, dass** das Pektin in einer Menge zugesetzt wird, die zwischen ungefähr 10 und ungefähr 1.000 mg/l, vorteilhafterweise zwischen ungefähr 50 und ungefähr 500 mg/l beträgt.

8. Verfahren gemäß einem beliebigen der Ansprüche 1 oder 2, **dadurch gekennzeichnet, dass** das Polysaccharid aus den Carrageenen gewählt ist und dem Bierendprodukt zugesetzt wird, um eine permanente Trübung zu bilden und den Kalttrub zu stabilisieren.

9. Verfahren gemäß Anspruch 8, **dadurch gekennzeichnet, dass** das Carrageen, welches sehr reaktiv ist, in einer Menge zugesetzt wird, die in der Größenordnung von ungefähr 10 mg/l liegt.

10. Verfahren gemäß einem beliebigen der Ansprüche 1 oder 2, **dadurch gekennzeichnet, dass** das Polysaccharid aus den Gummen, zum Beispiel aus den Gummen E400, E401, E402, E403, E404, E405, E413, E415, E416 oder aus Gummi arabicum gewählt ist.

11. Verfahren gemäß Anspruch 10, **dadurch gekennzeichnet, dass** das Gummi arabicum, welches schwach reaktiv ist, in einer Menge zugesetzt wird, die in der Größenordnung von ungefähr 1.000 mg/l liegt, wobei das Gummi arabicum dem Bierendprodukt zugesetzt wird, um den reversiblen Kalttrub zu stabilisieren und in Suspension zu halten.

12. Verfahren gemäß einem beliebigen der vorhergehenden Ansprüche, **dadurch gekennzeichnet, dass** das Polysaccharid in einer Menge zugesetzt wird, die zwischen ungefähr 5 mg/l und ungefähr 2.000 mg/l Würze oder Bier liegt, vorteilhafterweise zwischen ungefähr 10 mg/l und ungefähr 1.000 mg/l, vorzugsweise zwischen ungefähr 50 mg/l und ungefähr 500 mg/l, wobei die Mindestmengen von der Art des eingesetzten Polysaccharids, von der physikalisch-chemischen Zusammensetzung des Getränks, dem Zeitpunkt des Zusatzes und dem Reinheitsgrad des Polysaccharids abhängen und wobei die Höchstmengen von der Art des Polysaccharids und der Art des Getränks abhängen.

13. Verfahren gemäß einem beliebigen der Ansprüche 1 bis 12, **dadurch gekennzeichnet, dass** es einen Schritt umfasst, in welchem der warmen Würze Pektin zugesetzt wird, woraufhin die Würze in einem weiteren Schritt zentrifugiert wird.

14. Fermentiertes Getränk, das aus einer Bierwürze hergestellt wird, **dadurch gekennzeichnet, dass** es durch Anwenden des Verfahrens gemäß einem der Ansprüche 13 hergestellt wird, wobei das Getränk eine Trübung aufweist, die bei Umgebungstemperatur als irreversibel oder permanent zu bezeichnen ist und/oder einen reversiblen Kalttrub.
